# EUROPEAN PATENT SPECIFICATION

(11) **EP 2 106 191 B1**
(45) Date of publication and mention of the grant of the patent: **26.12.2012**
(21) Application number: 08400015.7
(22) Date of filing: 28.03.2008
(51) Int. Cl.: H04L 29/06, H04W 12/10

(54) **A method for updating a smartcard and a smartcard having update capability**
Verfahren zur Aktualisierung einer Chipkarte und Chipkarte mit Aktualisierungsfunktion
Procédé pour la mise à jour d'une carte intelligente et carte intelligente dotée d'une capacité de mise à jour

(43) Date of publication of application: 30.09.2009
(73) Proprietor: Vodafone Holding GmbH, 40213 Düsseldorf (DE)
(72) Inventor: Koraichi, Najib, 6333 CT Schimmert (NL); Montaner, Javier, 50008 Zaragoza (ES)
(74) Representative: Jostarndt, Hans-Dieter

(56) References cited:
- EP-A- 0 798 673
- WO-A-02/071727
- WO-A-2008/035183
- WO-A1-01/58081
- WO-A1-2006/106270
- KR-A- 20070 001 309

## Description

### Technical Field

The invention relates to the administration of a smartcard connected to a mobile terminal having access to a mobile communication network. Particularly, the invention relates to the transmission of data to the smartcard. The smartcard may be a user identification module, which is particularly used for identifying and authenticating a mobile user to the mobile communication network.

### Background of the Invention

Smartcards are cards containing an embedded integrated circuit for processing information. The embedded circuit comprises a memory for storing data and it can further comprise a microprocessor component for running applications and manipulating data. In mobile communication systems such smartcards are used as user identification modules, which particularly identify and authenticate a mobile user to a mobile communication network. Furthermore, such smartcards are used for providing additional services in the mobile communication system, for storing personal data of the mobile user and for storing configuration data of the mobile communication device, for example. In GSM (Global System for Mobile communication) the smartcards are configured as SIM (Subscriber Identity Module). In UMTS (Universal System for Mobile Telecommunication) the smartcards are configured as UICC (USIM Integrated Circuit Card) comprising a USIM (Universal Subscriber Identity Module) application. The smartcards are under control of the mobile network operator that issued the cards. This means that sensitive data and applications can only be modified with permission of the mobile network operator.

The so-called over the air (OTA) technology as described, for example, in ETSI TS 102 225 and in 3GPP TS 23.048, allows for updating or changing data and/or applications in the smartcard without having to reissue the card. The OTA technology uses a client/user architecture where at one end there is a backend system and at the other end there is the smartcard. The backend system comprises a database providing the data and an OTA gateway, which is typically operated by the mobile network operator and which sends the data to the smartcard via the mobile communication network. The OTA gateway encrypts the data using a key, which is shared between the OTA gateway and the smartcard. The smartcard decrypts the data using a corresponding decryption key thereby confirming that the data originates from the mobile network operator. If the data cannot be validated successfully, the smartcard denies access to its memory and other functions, and the data cannot be stored in the smartcard.

In today's OTA environments usually SMS (Short Message Service) is used for transmitting the data to the smartcard. Particularly, when new or updated applications have to be downloaded to the smartcard, the amount of data usually exceeds the size of one short message and the data is distributed among several short messages, which are sent to the smartcard. As a consequence, downloading a greater amount of data to the smartcard, such as, for example, a new or updated application, imposes a relatively huge load to the OTA gateway and the mobile communication network, since the data has to be sent from the OTA gateway to the smartcard via the mobile communication network.

WO 2008/035183 discloses a method for transferring data from a server to a mobile station using an OTA mechanism. The server first sends a notification to the mobile station thereby informing the mobile station that there is data to be transferred to the mobile station. When the mobile station receives the notification, it generates a transport key and sends a request including a transport key to the server. The transport key is encrypted using a session key provided by the server in the notification. When the server receives the request, it uses the transport key to encrypt the data for transfer to the mobile station.

EP 0 798 673 describes a method of securely loading commands in a smart card. The commands are provided by a first party and are transferred together with authentication codes produced by further parties. The card reproduces the authentication codes using corresponding keys and compares the reproduced codes with the transferred codes, in order to validate the commands. The keys are preinstalled in the card.

WO 01/58081 A1 describes a method for checking the integrity of data. In the message, a message is transmitted to a mobile communication device through a first channel and a check code is sent to the mobile communication device through a second channel. The mobile communication device uses the check code to verify the integrity of the message.

### Summary of the Invention

It is an object of the present invention to reduce the load of the OTA gateway holding the encryption key for secure communication, when downloading data to a smartcard using an OTA mechanism.

The object is achieved by a method comprising the features of claim 1 and by a smartcard comprising the features of claim 10. Embodiments of the method and the smartcard are given in the dependent claims.

The invention involves the idea to divide the download of the data and of a security token for validating the data into two steps. This has the advantage that the security token can be provided in a transmission step being independent from the transmission of the data to the smartcard. This leads to the further advantage that the data does not have to be provided by the server providing the security token thereby reducing the load of this server. Since the security token comprises a security feature and not the data to be downloaded itself, it has a smaller data volume than the data to be downloaded. The data is provided by a database that may be connected to the mobile terminal.

The smartcard may comprise a user identification module, particularly a SIM and/or a USIM. However, the smartcard could be any smartcard connected to a mobile terminal.

The connection between the server and the smartcard is established via the mobile terminal. When the mobile terminal receives the security token, it forwards the security token to the smartcard, where it is received in the receiving component.

In one embodiment of the method and the smartcard, the encrypted part of the security token is encrypted using an encryption key securely stored in the server and the encrypted part of the security token is decrypted using a decryption key allocated to the encryption key, the decryption key being securely stored in the smartcard.

Since the encryption is made using a key securely stored in the server the authenticity of the security token can be checked by decrypting the encrypted parts of the security token. Particularly, the security token originates from the server only if its encrypted part can be decrypted using the decryption key allocated to the encryption key used in the server.

In an embodiment of the method and the smartcard, the security feature comprises a checksum of the data, the checksum being used in the smartcard for validating the integrity of the data.

The checksum is an information uniquely derived from the data, such as, for example, a hash function computed using a hash algorithm known to a person skilled in the art. Since the checksum is different, when the data is modified, the checksum allows for validating the integrity of the data. This means that it is checked that the data has not been modified without permission. The checksum may be provided to the server by the database before sending the security token to the mobile terminal and/or the smartcard.

In a further embodiment of the method and the smartcard, the smartcard retrieves the data from the database in response to receiving the security token using information contained in the security token.

Advantageously, in this embodiment, the smartcard receives the security token at first. Then, the smartcard uses information contained in the security token to retrieve the data from the database. This information may comprise information identifying the data and/or information for addressing the database.

In a further embodiment of the method and the smartcard, the server sends a command to the database in connection with the transmission of the security token to the smartcard, the command instructing of the database to transmit the data to the smartcard.

In this embodiment, the transmission of the data to the smartcard is initiated by the server in connection with the transmission of the security token to the smartcard. Particularly, the server may initiate the transmission of the data to the smartcard after having sent the security token to the smartcard. The command for instructing the database to transmit the data to the smartcard may comprise information identifying the data and/or information identifying the smartcard.

One embodiment of the method and the smartcard provides that the data is encrypted and wherein the smartcard decrypts the data using a decryption key contained in the security token.

This embodiment improves the level of security by providing the data in encrypted form. Particularly, this prevents third parties from seeing the data while they are transmitted to the smartcard. Advantageously, the key used for decrypting the data in the smartcard is provided in the security token. Within the security token, this key may be contained in the encrypted part so that it is protected against access by unauthorized third parties.

In one embodiment of the method and the smartcard, the smartcard is connected to the database via the mobile terminal, the mobile terminal being connected to the database via the mobile communication network or a data network.

In this embodiment, a connection between the smartcard and the database is established by the mobile terminal. The mobile terminal is connected to the database via the mobile communication network or via another data network, such as, for example, the Internet. When it is received in the mobile terminal, the mobile terminal passes the data to the smartcard.

A further embodiment of the method and the smartcard provides that the first communication channel and/or the second communication channel is an SMS channel.

Advantageously, in this embodiment, SMS is used for transmitting the security token to the smartcard and/or for transmitting the data to the smartcard. Preferably, the SMS messages are received in the mobile terminal, which forwards the messages to the smartcard connected to the mobile terminal. In particular, SMS may be used for transmitting the data to the smartcard, if the mobile terminal and the database are connected to each other via the mobile communication network.

However, the data can be transmitted to the smartcard via a communication channel that is different from the communication channel via which the security token is transmitted to the smartcard. Therefore, in one embodiment of the method and the smartcard, the second communication channel is different from the first communication channel.

This allows for a greater flexibility when choosing the communication channel for transmitting the data to the smartcard. In general, the security token has a much smaller data volume than the data itself. Thus, the second communication channel for transmitting the data to the smartcard may be a communication channel providing high data transfer rates. Particularly, the second community patient channel may be a GPRS channel (GPRS: General Packet Radio Service) or another data communication channel provided by the network which connects the mobile terminal to the database. An example of such a communication channel is a communication channel based on the Internet protocol (IP). The first communication channel for transmitting the security token to the smartcard can be chosen independently from the second communication channel. Owing to the small data volume of the security token the second communication channel can be a communication channel which has a smaller data transfer rate.

In one embodiment of the method and the smartcard, the database is contained in an adapter module, which is connectable to the smartcard.

In a related embodiment of the method and the smartcard, the adapter module is connected between the mobile terminal and the smartcard.

The aforementioned embodiments have the advantage that the data is provided by an adapter module that can be connected directly to the smartcard. Particularly, the adapter module can be connected between the mobile terminal and the smartcard. In these embodiments, it is not necessary to download the data to the smartcard through a data network. However, authenticity and integrity of the data is guaranteed by means of the security token provided by the server for validating the data. Although the adapter module is connectable directly to the smartcard, use of the data provided by the adapter module is approved by the server and by means of the security token.

Moreover, in one embodiment of the method and the smartcard, the data is provided on a screen connected to the database and acquired by means of a camera sensor provided by the mobile terminal and wherein the mobile terminal passes the acquired data to the smartcard.

In this embodiment, the mobile terminal comprises a camera sensor for acquiring the data, which is provided on a screen. This has also the advantage that the data does not have to be downloaded to the smartcard via a data network. Furthermore, this embodiment can make use of the fact, that mobile terminals, such as, for example, mobile phones or PDAs (Personal Data Assistants), often comprise a camera sensor as a standard feature.

In a further embodiment of the method and the smartcard, the data is provided on the screen in a coded form, particularly as a barcode.

This embodiment has the advantage that coded data, especially barcodes, can be acquired electronically more easily. The barcode may be a two-dimensional barcode or a three-dimensional barcode, for example.

According to a further aspect of the invention a computer program is provided. The computer program is loadable into the internal memory of a digital computer and comprises software code portions for performing the steps of a method of the type described before when the computer program is run on a computer.

According to a further aspect of the invention, a system is provided. The system comprises a smartcard of the type described before. Moreover, the system comprises a server connected to the mobile communication network for transmitting the security token to the smartcard and a database connectable to the smartcard for transmitting the data to the smartcard.

The aforementioned and other aspects of the invention will also be apparent from and elucidated with reference to the embodiments described hereinafter making reference to the drawings.

### Brief Description of the Drawings

In the accompanying drawings
- Fig. 1: is a schematic depiction of a communication system comprising a smartcard to which data can be downloaded,
- Fig. 2: is a schematic block diagram depicting components of the smartcard used in the process of downloading data,
- Fig. 3: is a schematic flow diagram illustrating processes of downloading data to the smartcard and
- Fig. 4: is a schematic block diagram depicting an adapter module connected between a mobile terminal and a smart card.

### Detailed Description of Embodiments of the Invention

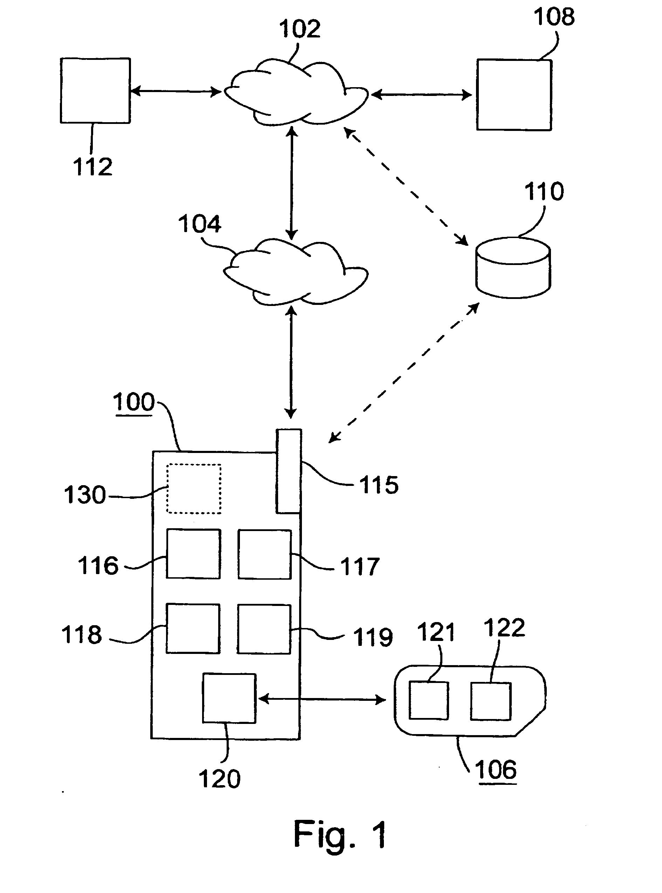

Fig. 1 schematically depicts a mobile communication system comprising a mobile terminal 100, such as, for example, a cellular phone, a PDA (Personal Data Assistant) or the like, which is wirelessly connected to a PLMN (Public Land Mobile Network) 102 via a radio access network 104. The PLMN 102 is the core network of the mobile communication system operated by a mobile network operator and may be configured according to the GSM standard or according to the UMTS standard, for example. The radio access network 104 may be configured as a GERAN (GSM Edge Radio Access Network) according to the GSM standard or as an UTRAN (Universal Terrestrial Radio Access Network) according to the UMTS standard, for example.

The mobile terminal 100 comprises a radio interface 115 for connecting the mobile terminal 100 to the PLMN 102 via the radio access network 104. The mobile user can operate the mobile terminal 100 by means an input component 116, such as, for example, a keyboard, and a display component 117. The operation of the mobile terminal 100 is controlled by a processor unit 118, which is connected to a memory 119 unit for storing applications that can be run on the processor unit 118 and for storing user and configuration data, which are accessed during the operation of the mobile terminal 100. The reference numeral 130 refers to a camera sensor, which is an optional component of the mobile terminal 100.

Through a card reader unit 120, the mobile terminal 100 is connected to a smartcard 106. The card reader unit 120 is usually arranged within a battery compartment of the mobile terminal 200, which is accessible by the mobile user.

The smartcard 106 contains a user identification module that provides information and functions for using the mobile terminal 100 in the mobile communication system. In this embodiment, the smartcard 106 particularly provides information for identifying and authenticating the mobile user in the PLMN 102. Particularly, the user identification module may be configured as a SIM according to the GSM standard or as a USIM according to the UMTS standard.

The smartcard 106 comprises a microprocessor unit 121 and a memory 122 for storing program codes run on the microprocessor 121 and data used in the operation of the smartcard 106. The data stored in smartcard 106 can be read out and manipulated using commands provided by the smartcard 106. A manipulation of the data may comprise modifying, deleting or adding data. Further commands are provided for accessing and executing the program code of applications stored in the smartcard 106. Moreover, applications may be managed while the smartcard 106 is in use of the mobile user. This means that the smartcard 106 provides commands for loading, installing, removing, locking and unlocking applications. The commands provided by the smartcard 106 can be externally accessed, particularly from the mobile terminal 100. Likewise, the smartcard 106 is able to access functions of the mobile terminal 100 using proactive commands. The proactive commands and commands for accessing the smartcard 106 may be provided by the so-called SIM Application Toolkit (SAT) or by the USIM Application Toolkit (USAT) both of which are specified in the document TS 31.111 of the 3GPP. Hereinafter, the SAT and the USAT are commonly referred to as (U)SAT.

In the smartcard 106, an OTA mechanism is enabled, which means that a connection can be established between the smartcard 106 and a background system. This allows for a management of data and/or applications stored in the smartcard 106 from an external site. In case of managing files the mechanism is referred to as remote file management (RFM) and in case of managing applications the mechanism is referred to as remote application management (RAM). For RFM and RAM a predefined set of commands of the smartcard 106 can be accessed from the external site. This may be the set of commands specified in the document TS 23.048 of the 3GPP. RFM and RAM allow for updating data stored in the smartcard 106 and for updating existing applications or downloading new applications to the smartcard 106 without having to reissue the smartcard 106.

The remote management of the smartcard 106 is only allowed to the card issuer or has to be authorized by the card issuer, which is the operator of the PLMN 102 the mobile user has subscribed to. This prevents unauthorized third parties from accessing sensitive data stored in the smartcard 106 and from making fraudulent use thereof.

As described hereinafter, cryptographic methods are applied for securing RFM and RAM. For this purpose an OTA server 108 is provided in the PLMN 102 that authorizes accesses to the smartcard 106. The OTA server 108 is under control of the mobile network operator. This means that only the mobile network operator is allowed to administrate the OTA server 108 and that the OTA server 108 is secured against access by third parties.

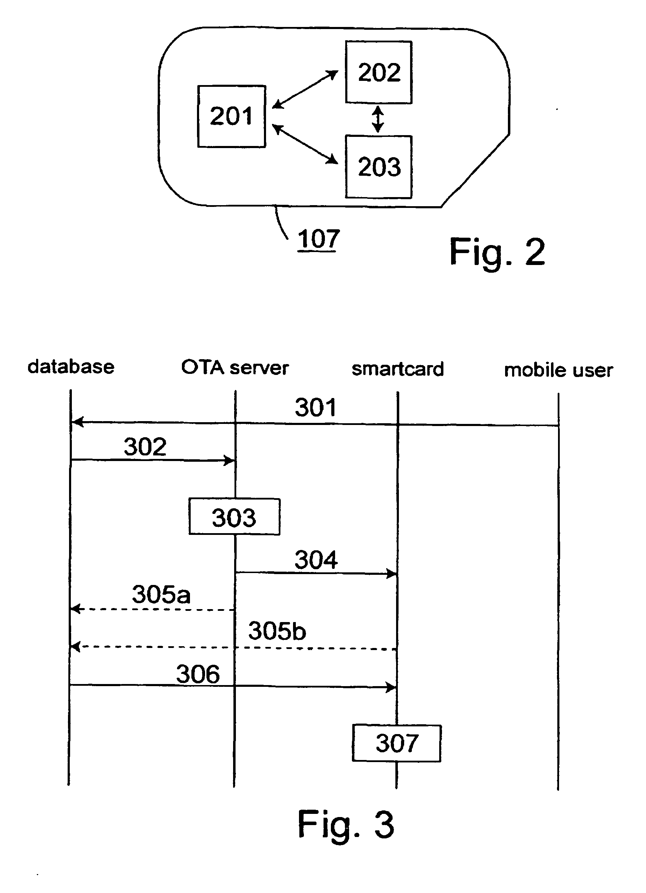

On the side of the smartcard 106 components depicted in figure 2 are provided for RFM and RAM. Particularly, the smartcard 106 comprises a receiving component 201 corresponding to an interface for receiving data from an external source, such as, for example, the mobile terminal 100. The receiving component 201 is connected to a decryption component 202 for decrypting information received from the OTA server 108 and to a validation component 203 adapted to validate data downloaded to the smartcard 106 using cryptographic information received from the OTA server 108. Preferably, the components 201, 202, 203 of the smartcard 106 are software modules. Their program code is stored in the memory 122 and run on the microprocessor 121 of the smartcard 106.

Before issuing the smartcard 106 to the mobile user, the mobile network operator generates one or more OTA keys, which are shared between the OTA server 108 and the smartcard 106. Preferably, there exist unique OTA keys for every smartcard 106 issued by the mobile network operator. For one smartcard 106 the OTA keys comprise one key for encrypting information which is used by the OTA server 108 and one key for decrypting the information. The decryption key is stored securely in the memory 122 of the smartcard 106 and can be accessed by the decryption component 202, when decrypting cryptographic information provided by the OTA server 108.

In one embodiment symmetric encryption is applied, where the same key is used for encrypting and decrypting data. Both the OTA server 108 and the smartcard 106 store the key, which is used by the OTA server 108 for encrypting information and by the smartcard 106 for decrypting information encrypted by the OTA server 108. In another embodiment asymmetric encryption is applied, where a key pair is provided comprising an encryption key and an allocated decryption key, which is different from the encryption key.

Applications or other data to be downloaded to the smartcard 106 is provided by a database 110, which may be operated by the mobile network operator or by a third party. The smartcard 106 may be connected to the database 110 via the PLMN 102 or via another data connection.

Before applications or other data can be downloaded to the smartcard 106, a checksum of the data is calculated and provided to the OTA server 108 and stored therein. The checksum is an information uniquely derived from the program code, such as, for example, a hash function computed using a hash algorithm known to a person skilled in the art. In addition, there is also provided an ID identifying the data. The ID is shared between the OTA server 108 and the database 110. The ID is an alphanumeric string, which is assigned uniquely to the application or data.

In the following, a RAM mechanism for downloading an application to the smartcard 106 is described. However, the person skilled in the art understands from the following description that an RFM mechanism for downloading configuration data or other data to the smartcard 106 can be implemented analogously.

Upon a corresponding request the OTA server 108 generates a security token. The security token comprises the checksum and the application ID of the application to be downloaded. After having generated the security token the OTA server 108 encrypts the security token using the encryption key described before. Then, the OTA server 108 sends the security token to the smartcard 106.

For transmitting the security token to the smart card, the OTA server 108 sends a message containing the security token to the mobile terminal 100 via predefined communication channel and the mobile terminal 100 forwards the message to the smartcard 106.

One example of a communication channel for transmitting the security token is an SMS channel provided in the mobile communications system. For using the SMS channel the OTA server 108 generates an SMS message containing the security token and passes the SMS message to an SMS service centre (SMS-C) 112 of the PLMN 102. The SMS-C 112 sends the SMS message to the mobile terminal 100, which receives the message at the radio interface 115. According to the usual processing of SMS messages the mobile terminal 100 then forwards the message to the smartcard 106. Another example is a transmission via a GPRS or HSDPA (High Speed Downlink Packet Access) channel of the mobile communication system using the bearer independent protocol (BIP). In general, any communication channel for downloading data to a smartcard 100 known to a skilled person can be used.

In the smartcard 106, the receiving component 201 receives the message containing the security token and recognizes the security token based on a predefined feature of the message. The feature may be a predefined keyword in the header of the message. After having recognized the security token, the receiving component 201 passes the security token to the decryption component 202.

The decryption component 202 decrypts the security token using the aforementioned decryption key. If the decryption is successful, the decryption component 202 recognizes a valid security token issued by the OTA server 108 and passes it to the validation component 203. The successful decryption may be confirmed by an answer message generated by the decryption component 202, which is sent to the OTA server 108. If the security token cannot be decrypted successfully using the predefined decryption key, the security token is not recognized as valid. The reason for the invalidity may be that the security token was sent by an unauthorized third party that does not possess the valid encryption key or that an error occurred during the generation and/or the transmission of the security token from the OTA server 108 to the smartcard 106. Therefore, the smartcard 106 may generate an error message to be sent to the OTA server 108, when a security token was received that has not been recognized as valid. This allows the OTA server 108 to regenerate and resend the security token to the smartcard 106.

Preferably, the answer message and the error message are sent from the mobile terminal 100 to the OTA server 108 through the mobile communication system using a predefined communication channel, such as, for example, the SMS channel. For controlling the mobile terminal 100 to send the answer message or the error message to the OTA server 108 the smartcard 106 may use proactive (U)SAT commands.

The program code of the application to be downloaded to the smartcard 106 is transmitted from the database 110 to the smartcard 106, where it is received in the receiving component 201. The receiving component 201 recognizes the program code and passes it to the validation component 203. In addition to the program code, the received data comprises the ID of the application that is also passed to the validation component 203. Processing of the program code in the validation component 203 comprises comparing the application ID with the application ID in the security token in order to validate that the correct application has been received. Moreover, the validation component 203 validates the integrity of the application by re-computing the checksum and comparing the result of the computation with the checksum contained in the security token. If both checksums match, the validation component 203 approves the program code for installation in the smartcard 106. Otherwise, the validation component 203 inhibits the installation of the program code. In this case, the validation component 203 may generate a corresponding error message, which is sent to the database or to the OTA server 108.

For increasing the level of security an encrypted version of the program code may be transmitted from the database 110 to the smartcard 106. This prevents third parties from seeing the program code during the transmission from the database 110 to the smartcard 106. In this embodiment, the decryption key for decrypting the program code is shared between the database 110 and the OTA server 108 and provided to the smartcard within the security token. The decryption of the program code may be made in the validation component 203 of the smartcard 106 when checking the integrity of the program code, or in the decryption component 202. The checksum may either be calculated on the basis of the plain program code or on the basis of the encrypted program code. In the latter case, the validation component 203 calculates the checksum before decrypting the program code, while in the first case it calculates the checksum after decrypting the program code.

The process of downloading the application is also depicted schematically in figure 3. In the illustrated embodiments, the download of the application is initiated by the mobile user. The mobile user controls the mobile terminal 100 to send a request message to the database 110 in step 301. Upon receipt of the request message, the database 110 informs the OTA server 108 about the request of the mobile user in step 302. This may be done by sending a message from the database 110 sent to the OTA server 108 specifying the application ID. In addition, an identification code of the mobile user may be given in the message, and thereby identifying the smartcard 106 to which the application is to be downloaded. After having received the message from the database 110 the OTA server 108 generates the security token in step 303, if it has not been generated beforehand. Then, the security token is sent from the OTA server 108 to the smartcard 106 in a way described before.

In one embodiment, after having transmitted the security token to the smartcard 106 the OTA server 108 sends a command to the database 110 in step 305a, which initiates the transmission of the program code from the database 112 to the smartcard 106 in step 306. Alternatively, the command for initiating the transmission may be sent from the smartcard 106 to the database 110 after the security token has been received in the smartcard 106. In figure 3, this is depicted as step 305b. The command comprises the application ID and the user ID, thereby identifying the desired application and the smartcard 106 to which the application is downloaded.

After having received the program code of the application from the database 110 the integrity of the program code is checked in the smartcard 106 in step 307 as described before. Beforehand, the security token used for the integrity check is being decrypted and validated in the smartcard 106 in the aforementioned way.

Further embodiments differ from the embodiments described before in that it is not the mobile user but the OTA server 108 who initiates the download by sending a corresponding request to the database 110. This allows the mobile network operator to initiate the download and to specify smartcards 106 to which the application is to be downloaded. The mobile network operator may use this option, when he wants to update certain smartcards 106 with a new application or a new version of an already existing application.

Moreover, it is possible that in step 301 of figure 3 the request for downloading the application is not addressed to the database 110 but to the OTA server 108. In this case, step 302 in which the database informs the OTA server 108 about the download request is omitted.

And of course, it is also possible to reverse the aforementioned order of the transmission of the security token and the program code. Thus, in further embodiments, the program code of the application is transmitted from the database 110 to the smartcard 106 at first. In the smartcard 106, the program code of the application is temporarily stored in the memory 122 until it is validated. The transmission of the security token from the OTA server 108 to the smartcard 106 may be initiated by the database 110, when the database 110 transmits the program code of the application to the smartcard 106. For this purpose, the database 110 sends a message to the OTA server specifying the application and the smartcard 106 by giving the application ID and the user ID of the mobile user. As an alternative, the smartcard 106 may retrieve the security token from the OTA server 108 after having received the program code of the application. For retrieving the security token, the smartcard 106 sends a message to the OTA server 108 via the mobile communication system again containing the application ID and the user ID.

The communication channel used for transmitting the program code to the smartcard 106 depends on the type of connection between the smartcard 106 and the database 110. In principle, any type of connection between a smartcard 106 and database 110 known to a skilled person and corresponding communication channels can be used. Hereinafter, several advantageous connection types are described by way of example.

In one embodiment, the database 110 is connected to the PLMN 102. The database 110 may be connected directly to the PLMN 102, or it may be connected to the PLMN 102 via another network. The program code is transmitted from the database 110 to the mobile terminal 100 via the PLMN 102 and the mobile terminal 100 forwards the program code to the smartcard 106. The communication between the PLMN 102 and the mobile terminal 100 can use any communication channel provided in the mobile communication system for data exchange.

Particularly, the program code may be transmitted to the mobile terminal 100 via the SMS channel. If the data volume of the program code exceeds one single SMS message, the program code is distributed among a plurality of concatenated SMS messages. The concatenated SMS messages are forwarded to the smartcard 106 in the order in which they are received in the mobile terminal 100. The smartcard 106 buffers messages and determines their original order based on features contained in the messages. Then, the smartcard 106 joins the messages and processes the resulting message in the validation component as described before.

In a system architecture in which the database and the mobile terminal 100 are connected through the PLMN 102, the program code can also be transmitted via the GPRS or HSDPA channel of the mobile communication system using the bearer independent protocol (BIP). This communication channel is an alternative to the SMS channel and allows for higher data transmission rates.

In an alternative architecture, the smartcard 106 is also connected to the database 110 through the mobile terminal 100 that receives the program code in the first instance and forwards it to the smartcard 106. However, the database 110 and the mobile terminal 100 are connected via a data network to which the mobile terminal 100 is connected via a certain access point. The data network may be the Internet, for example. In one embodiment of this architecture, the access point may be WLAN access point and the mobile terminal is connected to the access point via a WLAN (Wireless Local Area Network) connection. Other wireless connection technologies such as, for example, Bluetooth, ZigBee or NFC (Near Field Communication), may likewise be used for connecting the mobile terminal 100 to the access point. In another embodiment, the access point is a PC (Personal Computer) having access to the data network. The mobile terminal 100 is connected to the PC through a USB connection, for example.

Of course, the mobile terminal 100 could also be connected to the database directly in the same way, as it can be connected to the access point in the architecture described before. In this embodiment, in the database 110 may be included in a PC, for example.

Another type of communication channel for transmitting the program code to the mobile terminal 100 is an optical communication channel. This method for transferring the data to the mobile terminal 100 makes use of the fact, that today's mobile terminals 100 are often equipped with camera sensors 130 for taking pictures or for video telephony. In order to use this communication channel the program code may be transformed into a two-dimensional or three-dimensional barcode that is depicted on a screen. The screen is contained in device to which the program code can be transmitted from the database 110 in a suitably way. This device may be a television device, a PC or another mobile terminal of the same type as the mobile terminal 100 containing the smartcard 106, for example. The barcode on the screen is detected by means of the camera sensor 130 included in the mobile terminal 100 and passed to an application for interpreting the applied barcode, which may be run on the processor of the mobile terminal 100. After having extracted the program code from the barcode it is forwarded to the receiving device of the smartcard 106, which passes it to the validation component in order to process the program code in the way described before.

In further embodiments, the smartcard 106 is connected directly to the database 110. This means that the connection between the smartcard 106 and the database 110 is not established via the mobile terminal 100 or a data network.

In one embodiment, this is achieved by transferring the program code to the smartcard 106 using an external card reader, which is included in a device having access to the database 110 via a data connection. The data connection can be a direct connection or a connection via a data network.

However, for connecting the smartcard 106 to the external card reader the smartcard 106 has to be removed from the mobile terminal 100. This can be inconvenient for the mobile user. This problem can be solved by including the database 110 into an adapter module 401, which is connected to the smartcard 106, while the smartcard 106 is inserted in the card reader unit 120 of the mobile terminal 100.

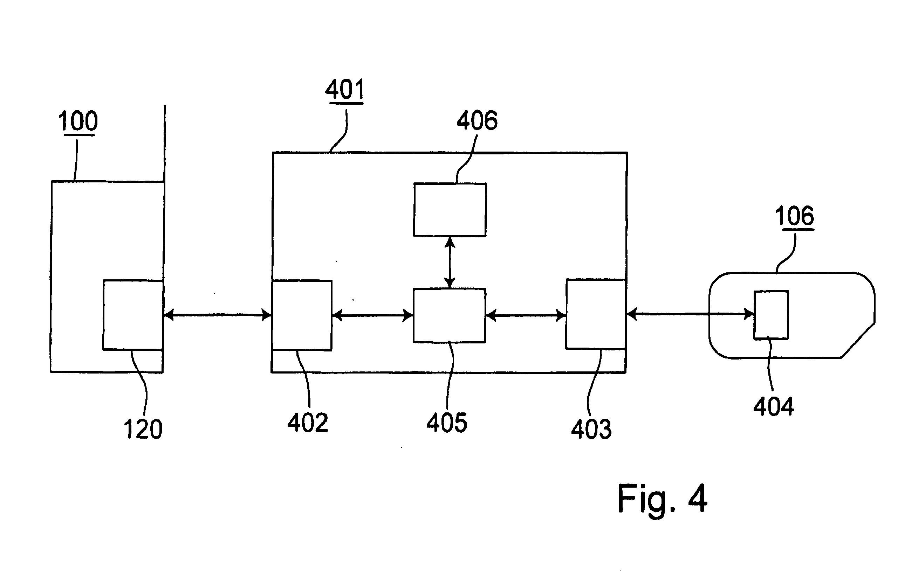

Preferably, the adapter module 401 is connected between the card reader unit 120 of the mobile terminal 100 and the smartcard 106 as depicted in figure 4.

Hence, communication signals between the mobile terminal 100 and the smartcard 106 are exchanged via the adapter module 401. Here, the adapter module 401 may be configured as a passive device, which is not engaged in the communication between the mobile terminal 100 and the smartcard 106. Likewise the adapter module 401 may have functionalities for modifying messages that are exchanged between the mobile terminal 100 and smartcard 106.

For connecting the adapter module 401 between the mobile terminal 100 and the smartcard 106, the adapter module 401 comprises a contacting element 402, which can be inserted into the card reader unit 120 of the mobile terminal 100 and which includes electric contacts for contacting contact elements of the card reader unit 120. Further electrical contacts 403 are provided for contacting electric contacts 404 of the smartcard 106. Moreover, the adapter module 401 comprises a microprocessor 405 and a memory unit 406. The microprocessor 405 is capable of communicating with the smartcard 106 and the mobile terminal 100 using a predefined communication protocol. This may be the same communication protocol used for the communication between the mobile terminal 100 and smartcard 106. As one of the electric contacts of the card reader unit 120 of the mobile terminal 100 acts as a power supply for the smartcard 106, the microprocessor 405 can be supplied with power via this electric contact.

In one exemplary embodiment, the adapter module 401 comprises a thin contacting element, which has essentially the same shape as the smartcard 106 and which can be inserted into the card reader unit 120 of the mobile terminal 100 between the electric contacts of the card reader unit 120 and the smartcard 106. On one surface, the contacting element comprises contact elements 402 for contacting the contact elements 404 of the smartcard 106 and on the opposite surface, contact elements 402 are arranged for contacting the contact elements of the card reader unit 120. The contact elements 402, 403 are connected to the microprocessor of the adapter module 401. The microprocessor 405 and the memory unit 406 of the adapter module 401 may be mounted on a circuit board, which is connected to the contacting element by means of a flexible wire, thereby allowing placing the circuit board into the battery compartment of the mobile terminal 100 together with the battery. As an alternative, the microprocessor 405 and the memory unit 406 may be included in a chip that is mounted on the contacting element. In this embodiment, the smartcard 106 is provided with a cutting for accepting the chip.

In another embodiment, the adapter module 401 comprises a contacting element 402 that has essentially the same shape and thickness as the smartcard 106 and that can be inserted into the card reader unit 120 of the mobile terminal 100 to contact the contact elements of the card reader unit 120. The contacting element 402 is connected to a circuit board via one or more flexible wires. The microprocessor 405 and the memory unit 406 are mounted on the circuit board and, in addition, the circuit board comprises a further card reader unit connected to the microprocessor 405 for receiving the smartcard 106. The circuit board may be thin enough to place it into the battery compartment of the mobile terminal 100, when the smartcard 106 is inserted into the card reader unit 120.

Using the adapter module 401 updates can be provided by means of an additional device the mobile user inserts into his mobile terminal 100. Particularly, this improves the faith of such mobile users that suspect an online data transfer from a remote location. Nonetheless, the smartcard 106 stays under control of the mobile network operator, since the security token has to be provided by the OTA server 108 in order to validate the application provided by the adapter module 401 before installation.

For controlling the download of an application to the smartcard 106 the adapter module 401 preferably provides a graphical user interface, such as, for example, a selection menu, at the display unit 117 of the mobile terminal 100, which allows the user to select the application to be downloaded to the smartcard 106. The adapter module 401 controls the mobile terminal 100 to provide the graphical user interface using (U)SAT commands, for example. After the user has selected the desired application using the graphical user interface the process of downloading the application to the smartcard 106 is initiated.

In this process, the adapter module 401 sends the program code of the application to the smartcard 106. Moreover, it may generate a request message for requesting the security token and controls the mobile terminal 100 to send the request message to the OTA server 108. Then, the security token allocated to the selected application is transmitted from the OTA server 108 to the smartcard 106 in the way described before. When the program code of the application and the security token are present in the smartcard 106, the validation component validates the program code and allows its installation, if the validation is successful.

While the invention has been illustrated and described in detail in the drawings and foregoing description, such illustration and description are to be considered illustrative or exemplary and not restrictive; the invention is not limited to the disclosed embodiments. Particularly, the invention is not limited to a download of an application or program code to smartcard 106. A person skilled in the art recognises that other data can be downloaded to the smartcard 106 in the same way as it has been described before in connection with the download of a program code of an application. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for transferring data to a smartcard (106) connected to a mobile terminal (100) having access to a mobile communication network (102), the method comprising the steps of:
- receiving via a first communication channel a security token in the smartcard (106) from a server (108) connected to the mobile communication network (102), the security token comprising a security feature for validating the data and being at least partly encrypted,
- decrypting the encrypted parts of the security token in the smartcard (106);
- receiving via a second communication channel the data from a database (110) in the smartcard (106);
- validating the data in the smartcard (106) using the security feature contained in the security token; **characterized in that**
the data is encrypted and the smartcard (106) decrypts the data using a decryption key contained in the security token.

2. The method according to claim 1, wherein the encrypted part of the security token is encrypted using an encryption key securely stored in the server (108) and wherein the encrypted part of the security token is decrypted using a decryption key allocated to the encryption key, the decryption key being securely stored in the smartcard (106).

3. The method according to one of the preceding claims, wherein the security feature comprises a checksum of the data, the checksum being used in the smartcard (106) for validating the integrity of the data.

4. The method according to one of the preceding claims, wherein the smartcard (106) retrieves the data from the database (110) in response to receiving the security token using information contained in the security token.

5. The method according to one of the preceding claims, wherein the server (108) sends a command to the database (110) in connection with the transmission of the security token to the smartcard (106), the command instructing of the database (110) to transmit the data to the smartcard (106).

6. The method according to one of the preceding claims, wherein the first communication channel and/or the second communication channel is an SMS channel.

7. The method according to one of the preceding claims, wherein the data is provided on a screen connected to the database (110) and acquired by means of a camera sensor (130) provided by the mobile terminal (100) and wherein the mobile terminal (100) passes the acquired data to the smartcard (106).

8. The method according to one of the preceding claims, wherein the data is provided on the screen in a coded form, particularly as a barcode.

9. A computer program loadable into the internal memory of a digital computer, comprising software code portions for performing the steps of one of the claims 1-8 when the computer program is run on a computer.

10. A smartcard (106) for use in mobile terminal (100) having access to a mobile communication network (102), the smartcard (106) comprising
- a receiving component (201) adapted to receive via a first communication channel a security token from a server (108) connected to the mobile communication network (102) and to receive data from a database (110) via a second communication channel, the security token comprising a security token for validating the data and being at least partly encrypted;
- a decryption component (202) adapted to decrypt the security token;
- a validation component (203) adapted to validate the data using the security feature contained in the security token; **characterized in that** the data is encrypted and the smartcard (106) is configured to decrypt the data using a decryption key contained in the security token.

11. A system comprising a smartcard (106) according to claim 10, a server (108) connected to the mobile communication network (102) for transmitting the security token to the smartcard (106) and a database (110) connectable to the smartcard (106) for transmitting the data to the smartcard (106).

12. The system according to claim 11, wherein the smartcard (106) is connected to the database (110) via the mobile terminal (100), the mobile terminal (100) being connected to the database (110) via the mobile communication network (102) or a data network.

13. The system according to claim 11 or 12, wherein the database (110) is contained in an adapter module (401), which is connectable to the smartcard (106).

14. The system according to claim 13, wherein the adapter module (401) is connected between the mobile terminal (100) and the smartcard (106).

## Patentansprüche

1. Verfahren zum Übertragen von Daten an eine Chipkarte (106), die mit einem mobilen Endgerät (100) verbunden ist, das Zugang zu einem Mobilkommunikationsnetz (102) besitzt, wobei das Verfahren die folgenden Schritte umfasst:
- Empfangen eines Sicherheitstokens in der Chipkarte (106) von einem mit dem Mobilkommunikationsnetz (102) verbundenen Server (108) über einen ersten Kommunikationskanal, wobei das Sicherheitstoken ein Sicherheitsmerkmal zum Überprüfen der Daten umfasst und mindestens teilweise verschlüsselt ist,
- Entschlüsseln der verschlüsselten Teile des Sicherheitstokens in der Chipkarte (106);
- Empfangen der Daten aus einer Datenbank (110) in der Chipkarte (106) über einen zweiten Kommunikationskanal;
- Überprüfen der Daten in der Chipkarte (106) unter Verwendung des in dem Sicherheitstoken enthaltenen Sicherheitsmerkmals;
**dadurch gekennzeichnet, dass** die Daten verschlüsselt sind und dass die Chipkarte (106) die Daten unter Verwendung eines in dem Sicherheitstoken enthaltenen Entschlüsselungsschlüssels entschlüsselt.

2. Verfahren nach Anspruch 1, bei dem der verschlüsselte Teil des Sicherheitstokens unter Verwendung eines Verschlüsselungsschlüssels verschlüsselt wird, der in dem Server (108) sicher gespeichert ist, und bei dem der verschlüsselte Teil des Sicherheitstokens unter Verwendung eines dem Verschlüsselungsschlüssel zugewiesenen Entschlüsselungsschlüssels entschlüsselt wird, wobei der Entschlüsselungsschlüssel in der Chipkarte (106) sicher gespeichert ist.

3. Verfahren nach einem der vorhergehenden Ansprüche, bei dem das Sicherheitsmerkmal eine Prüfsumme der Daten umfasst, wobei die Prüfsumme in der Chipkarte (106) zum Überprüfen der Integrität der Daten verwendet wird.

4. Verfahren nach einem der vorhergehenden Ansprüche, bei dem die Chipkarte (106) die Daten in Folge des Empfangs des Sicherheitstokens unter Verwendung von in dem Sicherheitstoken enthaltenen Informationen aus der Datenbank (110) abruft.

5. Verfahren nach einem der vorhergehenden Ansprüche, bei dem der Server (108) in Verbindung mit der Sendung des Sicherheitstokens an die Chipkarte (106) einen Befehl an die Datenbank (110) sendet, wobei der Befehl die Datenbank (110) anweist, die Daten an die Chipkarte (106) zu senden.

6. Verfahren nach einem der vorhergehenden Ansprüche, bei dem der erste Kommunikationskanal und/oder der zweite Kommunikationskanal ein SMS-Kanal ist.

7. Verfahren nach einem der vorhergehenden Ansprüche, bei dem die Daten auf einem mit der Datenbank (110) verbundenen Bildschirm bereitgestellt werden und mittels eines durch das mobile Endgerät (100) bereitgestellten Kamerasensors (130) erlangt werden und bei dem das mobile Endgerät (100) die erlangten Daten an die Chipkarte (106) übergibt.

8. Verfahren nach einem der vorhergehenden Ansprüche, bei dem die Daten auf dem Bildschirm in codierter Form, insbesondere als ein Strichcode, bereitgestellt werden.

9. Computerprogramm, das in den internen Speicher eines Digitalcomputers geladen werden kann, wobei das Computerprogramm Softwarecodeabschnitte zum Ausführen der Schritte eines der Ansprüche 1-8, wenn das Computerprogramm in einem Computer ausgeführt wird, umfasst.

10. Chipkarte (106) zur Verwendung in einem mobilen Endgerät (100), das Zugang zu einem Mobilkommunikationsnetz (102) besitzt, wobei die Chipkarte (106) umfasst:
- eine Empfangskomponente (201), die zum Empfangen eines Sicherheitstokens von einem mit dem Mobilkommunikationsnetz (102) verbundenen Server (108) über einen ersten Kommunikationskanal und zum Empfangen von Daten aus einer Datenbank (110) über einen zweiten Kommunikationskanal ausgelegt ist, wobei das Sicherheitstoken ein Sicherheitstoken zum Überprüfen der Daten umfasst und mindestens teilweise verschlüsselt ist;
- eine Entschlüsselungskomponente (202), die zum Entschlüsseln des Sicherheitstokens ausgelegt ist;
- eine Überprüfungskomponente (203), die zum Überprüfen der Daten unter Verwendung des in dem Sicherheitstoken enthaltenen Sicherheitsmerkmals ausgelegt ist;
**dadurch gekennzeichnet, dass** die Daten verschlüsselt sind und dass die Chipkarte (106) zum Entschlüsseln der Daten unter Verwendung eines in dem Sicherheitstoken enthaltenen Entschlüsselungsschlüssels konfiguriert ist.

11. System, das eine Chipkarte (106) nach Anspruch 10, einen Server (108), der mit dem Mobilkommunikationsnetz (102) verbunden ist, um das Sicherheitstoken an die Chipkarte (106) zu senden, und eine Datenbank (110), die mit der Chipkarte (106) verbunden werden kann, um die Daten an die Chipkarte (106) zu senden, umfasst.

12. System nach Anspruch 11, bei dem die Chipkarte (106) über das mobile Endgerät (100) mit der Datenbank (110) verbunden ist, wobei das mobile Endgerät (100) über das Mobilkommunikationsnetz (102) oder über ein Datennetz mit der Datenbank (110) verbunden ist.

13. System nach Anspruch 11 oder 12, bei dem die Datenbank (110) in einem Adaptermodul (401) enthalten ist, das mit der Chipkarte (106) verbunden werden kann.

14. System nach Anspruch 13, bei dem das Adaptermodul (401) zwischen das mobile Endgerät (100) und die Chipkarte (106) geschaltet ist.

## Revendications

1. Procédé de transfert de données vers une carte à puce (106) connectée à un terminal mobile (100) ayant accès à un réseau de communication mobile (102), le procédé comprenant les étapes consistant à :
- recevoir par le biais d'un premier canal de communication un jeton de sécurité dans la carte à puce (106) d'un serveur (108) connecté au réseau de communication mobile (102), le jeton de sécurité comprenant une caractéristique de sécurité pour valider les données et étant au moins partiellement encrypté,
- décrypter les parties encryptées du jeton de sécurité dans la carte à puce (106);
- recevoir par le biais d'un second canal de communication les données d'une base de données (110) dans la carte à puce (106) ;
- valider les données dans la carte à puce (106) en utilisant la caractéristique
de sécurité contenue dans le jeton de sécurité ; **caractérisé en ce que** les données sont encryptées et la carte à puce (108) décrypte les données en utilisant une clé de décryptage contenue dans le jeton de sécurité.

2. Procédé selon la revendication 1, dans lequel la partie encryptée du jeton de sécurité est encryptée en utilisant une clé d'encryptage stockée de manière sécurisée dans le serveur (108) et dans lequel la partie encryptée du jeton de sécurité est décryptée en utilisant une clé de décryptage attribuée à la clé d'encryptage, la clé de décryptage étant stockée de manière sécurisée dans la carte à puce (106).

3. Procédé selon une des revendications précédentes, dans lequel la caractéristique de sécurité comprend une somme de contrôle des données, la somme de contrôle étant utilisée dans la carte à puce (106) pour valider l'intégrité des données.

4. Procédé selon une des revendications précédentes, dans lequel la carte à puce (106) récupère les données de la base de données (110) en réponse à la réception du jeton de sécurité en utilisant des informations contenues dans le jeton de sécurité.

5. Procédé selon une des revendications précédentes, dans lequel le serveur (108) envoie une commande à la base de données (110) en connexion avec la transmission du jeton de sécurité à la carte à puce (106), la commande instruisant la base de données (110) de transmettre les données à la carte à puce (106).

6. Procédé selon une des revendications précédentes, dans lequel le premier canal de communication et/ou le second canal de communication est un canal SMS.

7. Procédé selon une des revendications précédentes, dans lequel les données sont fournies sur un écran connecté à la base de données (110) et acquises au moyen d'un capteur d'appareil photo (130) fourni par le terminal mobile (100), et dans lequel le terminal mobile (100) passe les données acquises à la carte à puce (106).

8. Procédé selon une des revendications précédentes, dans lequel les données sont fournies sur l'écran sous forme codée, notamment en tant que code-barres.

9. Programme informatique pouvant être chargé dans la mémoire interne d'un ordinateur numérique, comprenant des portions de code logiciel pour réaliser les étapes d'une des revendications 1 à 8 lorsque le programme informatique est exécuté sur un ordinateur.

10. Carte à puce (106) destinée à être utilisée dans un terminal mobile (100) ayant accès à un réseau de communication mobile (102), la carte à puce (106) comprenant
- un composant de réception (201) adapté à recevoir par le biais d'un premier canal de communication un jeton de sécurité d'un serveur (108) connecté au réseau de communication mobile (102) et à recevoir des données d'une base de données (110) par le biais d'un second canal de communication, le jeton de sécurité comprenant un jeton de sécurité pour valider les données et étant au moins partiellement encrypté ;
- un composant de décryptage (202) adapté à décrypter le jeton de sécurité ;
- un composant de validation (203) adapté à valider les données en utilisant la caractéristique de sécurité contenue dans le jeton de sécurité ; **caractérisée en ce que**
les données sont encryptées et la carte à puce (106) est configurée pour décrypter les données en utilisant une clé de décryptage contenue dans le jeton de sécurité.

11. Système comprenant une carte à puce (106) selon la revendication 10, un serveur (108) connecté au réseau de communication mobile (102) pour transmettre le jeton de sécurité à la carte à puce (106) et une base de données (110) pouvant être connectée à la carte à puce (106) pour transmettre les données à la carte à puce (106).

12. Système selon la revendication 11, dans lequel la carte à puce (106) est connectée à la base de données (110) par le biais du terminal mobile (100), le terminal mobile (100) étant connecté à la base de données (110) par le biais du réseau de communication mobile (102) ou d'un réseau de données.

13. Système selon la revendication 11 ou 12, dans lequel la base de données (110) est contenue dans un module adaptateur (401) qui peut être connecté à la carte à puce (106).

14. Système selon la revendication 13, dans lequel le module adaptateur (401) est connecté entre le terminal mobile (100) et la carte à puce (106).
